# EUROPEAN PATENT SPECIFICATION

(11) **EP 3 088 296 B1**
(45) Date of publication and mention of the grant of the patent: **29.11.2017**
(21) Application number: 15166078.4
(22) Date of filing: 30.04.2015
(51) Int. Cl.: B63H 21/38, F16H 57/04, B63H 5/125

(54) **SEPARATION PLATE FOR AN AZIMUTH THRUSTER**
TRENNPLATTE FÜR EIN AZIMUTTRIEBWERK
PLAQUE DE SÉPARATION POUR UN PROPULSEUR AZIMUTAL

(43) Date of publication of application: 02.11.2016
(73) Proprietor: Caterpillar Propulsion Production AB, 475 22 Öckerö (SE)
(72) Inventor: Lagesson, Niklas, 423 39 Torslanda (SE)
(74) Representative: BRP Renaud & Partner mbB Rechtsanwälte Patentanwälte Steuerberater

(56) References cited:
- WO-A1-2013/072548
- GB-A- 1 214 782
- NL-A- 8 005 590

## Description

### Technical Field

The present disclosure generally relates to an azimuth thruster for a marine vessel, and in particular to a separation plate configured to be arranged between an upper gear unit and an azimuth unit of the azimuth thruster.

### Background

Azimuth thrusters are commonly used as propulsion devices for marine vessels. Azimuth thrusters are at least partly arranged beneath a hull of a marine vessel and typically comprise an upper gear unit, an azimuth unit and a lower gear unit. The upper gear unit is connected to a horizontal drive shaft via an upper gear crown wheel and configured to mechanically drive a vertical input shaft of the azimuth thruster. The azimuth unit is connected to the upper gear unit via a slewing bearing. The slewing bearing is configured to rotate the azimuth unit relative to the upper gear unit for maneuvering the vessel. The lower gear unit includes one or more propellers drivably connected to the vertical input shaft for providing thrust to the marine vessel.

Lubrication of the azimuth thruster typically is such that the slewing bearing within the azimuth unit is immersed in lubricant to arrange a full bath lubrication. Whereas the upper gear crown wheel within the upper gear unit is splash lubricated. The splash lubrication is arranged to reduce frictional losses due to the upper gear crown wheel churning the lubricant.

NL 8 005 590 A discloses an azimuth thruster with an azimuth unit. A top end of the azimuth unit is housed by a substantially rectangular housing comprising a flat lower separation plate and a flat upper separation plate.

WO 2013/072548 A1 discloses an azimuth thruster with an azimuth unit covered by a flat cover plate.

GB 1 214 782 A discloses an azimuth thruster with an azimuth unit, wherein a top side of the azimuth unit is housed by a substantially rectangular housing with a flat bottom plate an a flat top plate.

The present disclosure is directed, at least in part, to improving or overcoming one or more aspects of prior systems.

### Summary of the Disclosure

According to a first aspect of the present disclosure a separation plate according to claim 1 is disclosed. Further modifications of the separation plate are disclosed in the dependent claims.

According to a second aspect of the present disclosure an azimuth thruster for a marine vessel is disclosed. The azimuth thruster comprises an upper gear unit including an upper gear crown wheel, an azimuth unit including a slewing bearing, a first lubricant compartment disposed inside the azimuth unit and configured to accommodate lubricant for bath lubricating the slewing bearing, a second lubricant compartment disposed inside the upper gear unit and configured to accommodate lubricant for splash-lubricating the upper gear crown wheel, and a separation plate as exemplary disclosed herein.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic drawing of an exemplary azimuth thruster for a marine vessel;
Fig. 2 shows a cross-sectional view of an exemplary separation plate disposed between an upper gear unit and an azimuth unit of an azimuth thruster and including a hollow space for accommodating lubricant during operation of the azimuth thruster;
Fig. 3 shows a schematic drawing of the exemplary separation plate shown in Fig. 2;
Fig. 4 shows a sectional view of an azimuth thruster with the exemplary separation plate and indicates an exemplary lubricant level at no operation of the azimuth thruster;
Fig. 5 shows a sectional view of an azimuth thruster with the exemplary separation plate and indicates an exemplary lubricant level during operation of the azimuth thruster; and
Fig. 6 shows a sectional view of an azimuth thruster with the exemplary separation plate and indicates an exemplary lubricant level during a tilt of the azimuth thruster.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that during operation of the azimuth thruster heat and aeration cause the lubricant to expand. Consequently, the expanded lubricant, which is typically accommodated in a first lubricant compartment within the azimuth unit for full bath lubrication of the slewing bearing, may enter the upper gear unit. As a result, gearwheels of the upper gear unit, such as the upper gear crown wheel, may be immersed in lubricant. This in turn may increase frictional losses of the azimuth thruster and, thus, may reduce an efficiency of the azimuth thruster.

The present disclosures is thus based in part on the realization that a separation plate is provided between the azimuth unit and the upper gear unit. The separation plate includes a hollow space that is open to the first lubricant compartment within the azimuth unit. The hollow space defines a defined minimal accommodation volume sufficiently large enough to accommodate lubricant during operation of the azimuth thruster such that gearwheels of the upper gear unit, in particular the upper gear crown wheel and an upper gear pinion wheel, are not immersed in lubricant. Thus, despite lubricant expansion, the hollow space is capable to accommodate enough lubricant such that a lubricant level within the upper gear unit is below the upper gear crown wheel. As a result, during operation of the azimuth thruster the slewing bearing is always immersed in lubricant, whereas the upper gear crown wheel is never immersed in lubricant. By using a separation plate with a hollow space as disclosed herein, frictional losses in the upper gear unit may be reduced and an efficiency of the azimuth thruster may be increased.

Moreover, the present disclosure is based in part on the realization that the defined minimal accommodation volume of the hollow space is configured to compensate a tilted installation of the azimuth thruster within the marine vessel. Thus, when the azimuth thruster is installed in the marine vessel, for example, under a sideways (outboardly) tilt, e.g. in case the marine vessel is powered by two azimuth thrusters, the defined minimal accommodation volume is configured to accommodate enough lubricant such that the resulting lubricant level is below the upper gear crown wheel. Likewise, when the azimuth thruster is installed in the marine vessel, for example, under a rearward tilt, e.g. in case the azimuth thruster is installed in the marine vessel using an azimuth thruster installation arrangement, the defined minimal accommodation volume is configured to accommodate enough lubricant such that the resulting lubricant level is below the upper gear crown wheel. Moreover, the defined minimal accommodation volume is configured to accommodate enough lubricant such that for a combination of an outboardly and rearwardly tilted installation of the azimuth thruster within the marine vessel the resulting lubricant level is below the upper gear crown wheel. As a result, the azimuth thruster can operate efficiently even when installed within the marine vessel under a sideways and/or rearward tilt.

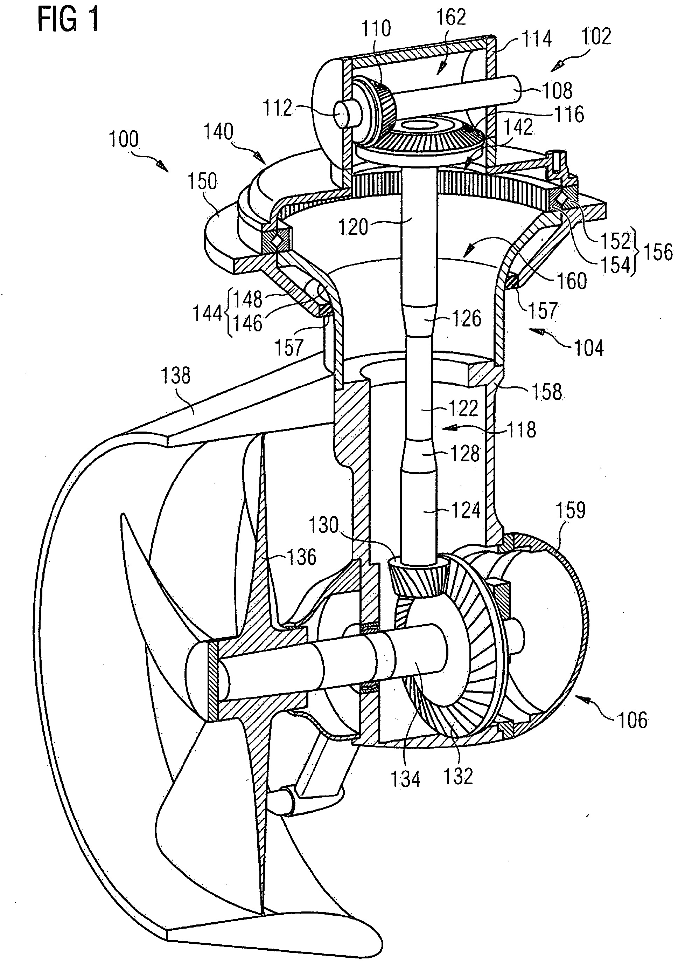

Referring now to the drawings, Fig. 1 shows a schematic drawing of an exemplary azimuth thruster 100 for a marine vessel. Azimuth thruster 100 includes an upper gear unit 102, an azimuth unit 104 and a lower gear unit 106.

Upper gear unit 102 includes a horizontal drive shaft 108 terminating to an upper gear pinion wheel 110. Upper gear pinion wheel 110 includes an upper gear pinion wheel extension 112 configured to rotatably support horizontal drive shaft 108 within an upper gear housing 114. Upper gear pinion wheel 110 is configured to transmit power from horizontal drive shaft 108 to an upper gear crown wheel 116.

Upper gear crown wheel 116 is mounted on top of a substantially vertical input shaft 118. Vertical input shaft 118 includes an upper crown wheel shaft 120, an intermediate shaft 122, and a lower pinion shaft 124. Upper crown wheel shaft 120 is drivably connected to intermediate shaft 122 via a first spline connection 126. Lower pinion shaft 124 is drivably connected to intermediate shaft 122 via a second spline connection 128. First and second spline connections 126, 128 may be flexible shaft couplings or floating shaft couplings.

Horizontal drive shaft 108, upper gear pinion wheel 110, upper gear crown wheel 116 and upper crown wheel shaft 120 together form an upper gear transmission.

Vertical input shaft 118 terminates to a lower gear pinion wheel 130 formed on lower pinion shaft 124. Lower gear pinion wheel 130 extends into lower gear unit 106 and transmits the power to a lower gear crown wheel 132. Lower gear crown wheel 132 is connected to a propeller shaft 134. Propeller shaft 134 extends substantially horizontal and is provided with a propeller 136 for providing thrust to the azimuth thruster. Propeller 136 may be any type of propeller 136 known to a person skilled in the art.

Lower gear pinion wheel 130, lower gear crown wheel 132 and propeller shaft 134 together form a lower gear transmission. The lower gear transmission is disposed inside the lower gear unit 106.

Propeller 136 is surrounded by a nozzle 138. Nozzle 138 is fixedly connected to lower gear unit 106 and may be any type of nozzle 138 known to a person skilled in the art. Nozzle 138 is configured to increase a thrust of propeller 136 and protect propeller 136 against, for example, debris. In some embodiments, azimuth thruster 100 may not include nozzle 138.

For maneuvering the marine vessel, lower gear unit 106 including propeller 136 and nozzle 138 need to be rotated around vertical input shaft 118. This means that upper gear unit 102 needs to be stationary, e.g. non-rotatable, whereas lower gear unit 106 needs to be rotatable. To rotate lower gear unit 106 around upper gear unit 102 and thus about vertical input shaft 118, azimuth thruster 100 includes azimuth unit 104.

Azimuth unit 104 is connected to upper gear unit 102 via a separation plate 140. Separation plate 140 includes a hole 142 configured to accommodate upper crown wheel shaft 120. Thus, separation plate 140 at least partially separates azimuth unit 104 from upper gear unit 102. An upper crown wheel shaft housing (not shown) may be connected to separation plate 140 and protrude through hole 142 for rotatably supporting upper crown wheel shaft 120.

Azimuth unit 104 further includes an azimuth stem 144 with an inner azimuth stem 146 and an outer azimuth stem 148. Outer azimuth stem 148 is connected to separation plate 140 via a ring-shaped gear pinion 152. Ring-shaped gear pinion 152 is fixedly connected to an annular flange 150 of outer azimuth stem 148. Annular flange 150 is fixedly connected to a hull structure of the marine vessel.Thus, outer azimuth stem 148 including separation plate 140 and upper gear unit 102 are stationary, e.g. non-rotatable, with respect to the marine vessel.

Ring-shaped gear pinion 152 rotates a ring-shaped gearwheel 154 fixedly connected to inner azimuth stem 146. Ring-shaped gear pinion 152 and ring-shaped gearwheel 154 together form a slewing bearing 156. Slewing bearing 156 is configured to rotate inner azimuth stem 146 relative to outer azimuth stem 148.

Inner azimuth stem 146 is connected at its lower part to a vertical shaft housing 158. Vertical shaft housing 158 surrounds vertical input shaft 118 and connects inner azimuth stem 146 with lower gear unit 106. Vertical shaft housing 158 is fixedly connected to a lower gear housing 159. Lower year housing 159 surrounds the lower gear transmission of lower gear unit 106.

As outer azimuth stem 148 is non-rotatably connected to the hull structure of the marine vessel, and as inner azimuth stem 146 is rotatably connected to outer azimuth stem 148 via slewing bearing 156, lower gear unit 106 is rotatable relative to upper gear unit 102 via slewing bearing 156.

Inside azimuth unit 104 a first lubricant compartment 160 is disposed to accommodate lubricant for bath lubricating slewing bearing 156. Lubricant may be any type of lubricant known to a person skilled in the art For example, the lubricant may be oil.

First lubricant compartment 160 is formed by an annular space surrounding vertical input shaft 118. First lubricant compartment 160 is filled with lubricant such that slewing bearing 156 is immersed in lubricant for arranging a full bath lubrication of slewing bearing 156. For keeping the lubricant within azimuth stem 144, a radial shaft seal 157 is arranged between a lower end of outer azimuth stem 148 and a lower end of inner azimuth stem 146.

Typically, first lubricant compartment 160 accommodates a volume of lubricant in a range between about 0.5 m³ and about 3 m³, defending on the type and size of azimuth thruster 100 and inner azimuth stem 146.

Inside upper gear unit 102 a second lubricant compartment 162 is disposed. Second lubricant compartment 162 is configured to accommodate lubricant for splash lubricating upper gear pinion wheel 110 and upper gear crown wheel 116. For this, lubricant spray nozzles (not shown) are disposed inside upper gear unit 102. The lubricant spray nozzles are configured to spray lubricant onto the upper gear transmission, thereby providing a splash lubrication of upper gear pinion wheel 110 and upper gear crown wheel 116. In some embodiments, pinched lubricant pipes may be used instead of lubricant spray nozzles.

First lubricant compartment 160 disposed inside azimuth unit 104 and second lubricant compartment 162 disposed inside upper gear unit 102 are fluidly connected via hole 142. Thus, lubricant sprayed onto upper gear pinion wheel 110 and upper gear crown wheel 116 drains from second lubricant compartment 162 to first lubricant compartment 160 via hole 142. On the other hand, lubricant accommodated in first lubricant compartment 160 may enter second lubricant compartment 162 via hole 142. Lubricant may enter second lubricant compartment 162, for example, during operation of azimuth thruster 100, because during operation of azimuth thruster 100 lubricant expands and the space provided in first lubricant compartment 160 for accommodating lubricant may not be sufficient to accommodate the expanded lubricant. Lubricant expansion is caused by heat and aeration. Thus, during normal operation of azimuth thruster 100 lubricant may enter second lubricant compartment 162 and immerse at least partially the upper gear transmission, such as upper gear crown wheel 116.

However, if parts of the upper gear transmission are immersed in lubricant, frictional losses occur due to gearwheels churning lubricant. As a consequence, an efficiency of the upper gear transmission and, thus, an efficiency of azimuth thruster 100 may be reduced.

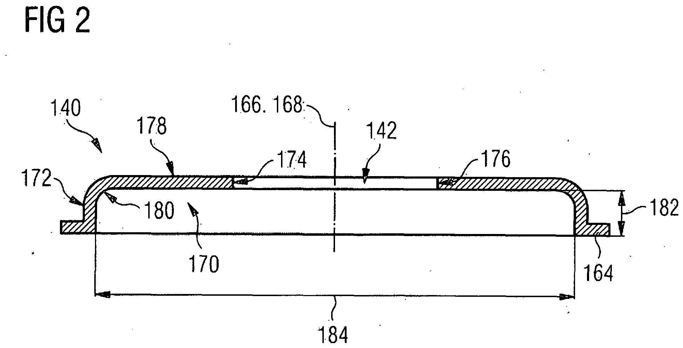

To prevent upper gear crown wheel 116 and thus the upper gear transmission to be immersed in lubricant, a special design of separation plate 140 is required. Fig. 2 shows a cross-sectional view of such an exemplary separation plate 140.

Separation plate 140 includes a cylindrical body 164. Cylindrical body 164 includes a central axis 166 extending in longitudinal direction of cylindrical body 164. Separation plate 140 further includes hole 142 disposed in cylindrical body 164 and configured to accommodate upper crown wheel shaft 120. Hole 142 includes a hole axis 168. In the exemplary embodiment, hole axis 168 extends along central axis 166. In some embodiments, hole axis 168 may extend parallel to central axis 166. A typical diameter of cylindrical body 164 is in a range between, for example, about 1 m and about 3 m. A typical diameter of hole 140 is in a range between, for example, about 0.5 m and about 1.2 m.

Separation plate 140 further includes a hollow space 170. Hollow space 170 is formed in cylindrical body 164. For example, hollow space 170 is formed by deep drawing or by casting separation plate 140. In some embodiments, hollow space 170 may be milled into cylindrical body 164.

Hollow space 170 extends at least partially circumferentially about central axis 166. Hollow space 170 includes an outer side wall 172 and an inner side wall 174. Outer side wall 172 is provided at a radial outer position with respect to central axis 166. Inner side wall 174 is provided at a radial inner position with respect to central axis 166. In other words, outer side wall 172 is disposed radially outward of inner side wall 174. Or in yet other words, outer side wall 172 includes a radial distance from central axis 166 that is larger than a radial distance of inner side wall 174.

In the exemplary embodiment, inner side wall 174 is aligned circumferentially with a circumferential face 176 of hole 142. In some embodiments, inner side wall 174 may not be aligned with circumferential face 176. Thus, in some embodiments inner side wall 174 may include a radial distance from central axis 166 that is larger than a radius of hole 142.

Hollow space 170 further includes a top wall 178. Top wall 178 connects outer side wall 172 with inner side wall 174. Top wall 178 transitions into outer side wall 172 via a first rounded edge 180. In the exemplary embodiment, first rounded edge 180 is a fillet. The fillet may be an arcuate fillet or a non-arcuate fillet. First rounded edge 180 may include a radius that is in a range between about 7 mm and about 15 mm. First rounded edge 180 may be formed during casting or deep drawing of separation plate 140. First rounded edge 180 is configured to reduce an amount of crevice volume within hollow space 170 such that a maximized volume of lubricant can be accommodated within hollow space 170. In embodiments where inner side wall 174 is not aligned with circumferential face 176, top wall 178 may transition to inner side wall 174 via a second rounded edge equal or non-equal to first rounded edge 180. In some embodiments, first rounded edge 180 may be a chamfer. Separation plate 140 may be formed from, for example, cast iron. In some embodiments, separation plate 140 may be formed from other materials such as, for example, casted steel.

Hollow space 170 is configured to accommodate a volume of lubricant during operation of azimuth thruster 100 which would otherwise enter second lubricant compartment 162 due to lubricant expansion, thereby causing a lubricant level above upper gear crown wheel 116. For example, hollow space 170 may be configured to accommodate a volume of lubricant in a range between about 100 liters and about 200 liters.

Of course, in other embodiments, hollow space 170 may be configured to accommodate a different volume of lubricant. Thus, hollow space 170 is generally configured to accommodate a volume of lubricant which depends on a number of parameters, such as on the type of lubricant used, an amount of lubricant contained inside first lubricant compartment 160, a thermal expansion coefficient of the lubricant, a temperature rise during operation of azimuth thruster 100, a distance of upper gear crown wheel 116 from cylindrical body 164, a diameter of upper crown wheel shaft 120, a diameter of upper gear housing 114, etc.

Hollow space 170 further includes an axial extension 182 with respect to central axis 166, and a radial extension 184 with respect to central axis 166. Axial extension 182 may have a ratio to radial extension 184 in a range between about 2% and about 25%.

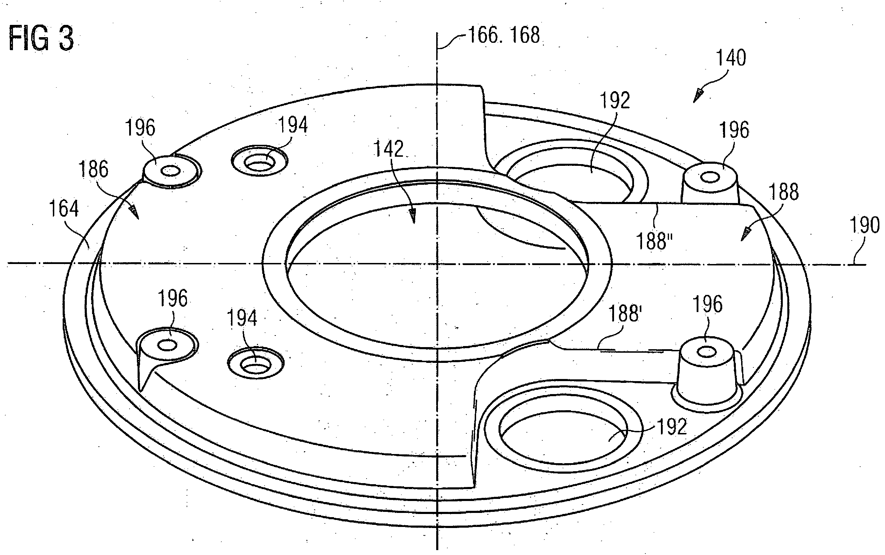

Fig. 3 shows a schematic drawing of the exemplary separation plate 140 shown in Fig. 2. Elements already explained in connection with Fig. 2 have the same reference numerals.

Hollow space 170 of Fig. 2 includes a first hollow space portion 186 disposed on one side of central axis 166 and a second hollow space portion 188 disposed on the other side of central axis 166. First hollow space portion 186 is formed on a first cylindrical body portion and second hollow space portion 188 is formed on a second cylindrical body portion opposite the first cylindrical body portion.

First hollow space portion 186 extends in circumferential direction about central axis 166 by about 180 degrees, whereas second hollow space portion 188 extends in circumferential direction about central axis 166 by about 30 degrees. In some embodiments, first hollow space portion 186 may extend in circumferential direction about central axis 166 in a range between about 140 degrees and about 220 degrees, and second hollow space portion 188 may extend in circumferential direction about central axis 166 in a range between about 20 degrees and about 60 degrees. Furthermore, second hollow space portion 188 includes a first side wall 188' and a second side wall 188". First side wall 188' and second side wall 188" are parallel to each other. First side wall 188' and second side wall 188" extend parallel to axis 190.

Moreover, first hollow space portion 186 extends circumferentially symmetric about an axis 190 extending in a plane perpendicular to central axis 166. Second hollow space portion 188 extends circumferentially symmetric about the same axis 190. Thus, axis 190 is a common symmetry line of first hollow space portion 186 and second hollow space portion 188 with respect to a circumferential extension about central axis 166. In some embodiments, separation plate may not include a common symmetry line.

As can be seen in Fig. 3, separation plate 140 further includes a pair of first openings 192 formed in cylindrical body 164 and disposed between first hollow space portion 186 and second hollow space portion 188. The pair of first openings 192 is configured to provide access to first lubricant compartment 160. The pair of first openings 192 is configured to accommodate slew drives (not shown). The slew drives protrude in first lubricant compartment 160 through the pair of first openings 192 and drive ring-shaped gear wheel 154, thereby enabling a rotation of inner azimuth stem 146 relative to outer azimuth stem 148.

Separation plate 140 further includes a pair of second openings 194 disposed in first hollow space portion 186. The pair of second openings 194 is configured to provide access to first lubricant compartment 160. For example, the pair of second openings 194 is configured to accommodate fill level measuring devices (not shown). The fill level measuring devices protrude into first lubricant compartment 160 through the pair of second openings 194 and are configured to measure a lubricant level within first lubricant compartment 160 to issue, for example, a low fill level alarm. In some embodiments, separation plate 140 may include a different number and a different arrangement of first and second openings 192, 194 formed in separation plate 140.

Separation plate 140 further includes four mounting holes 196 for fixing lifting devices such as hooks or the like thereto. Mounting holes 196 are disposed symmetric about axis 190 and central axis 166. Again, in some embodiments, the number of mounting holes 196 and/or the arrangement of mounting holes 196 on separation plate 140 may be different.

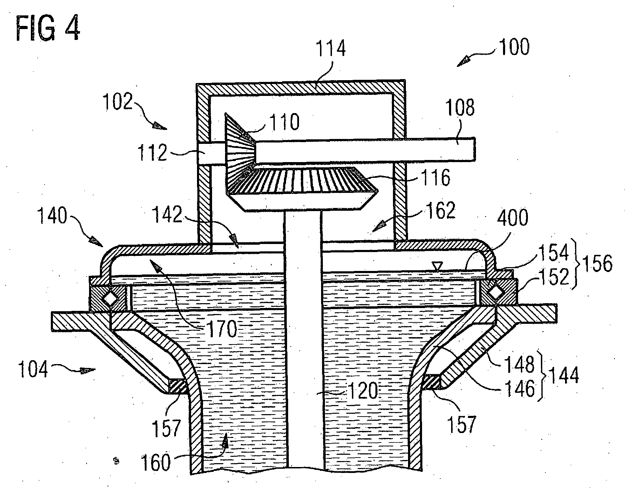

Fig. 4 shows a sectional view of azimuth thruster 100 with the exemplary separation plate 140 of Fix. 2. Elements already explained in connection with Fig. 1 to 3 have the same reference numerals, such as upper gear unit 102 and azimuth unit 104. In Fig. 4 an exemplary lubricant level at no operation of azimuth thruster 100 is indicated by line 400. As can be seen, lubricant level 400 is such that slewing bearing 156 is immersed in lubricant. Thus, a full bath lubrication of slewing bearing 156 is provided. Lubricant level 400 may therefore constitute a minimal lubricant fill level to ensure a full bath lubrication of slewing bearing 156. As can be further seen, hollow space 170 is not filled with lubricant as the defined minimal accommodation volume defined by hollow space 170 is reserved for accommodating lubricant during operation of azimuth thruster 100 when the lubricant is subject to lubricant expansion.

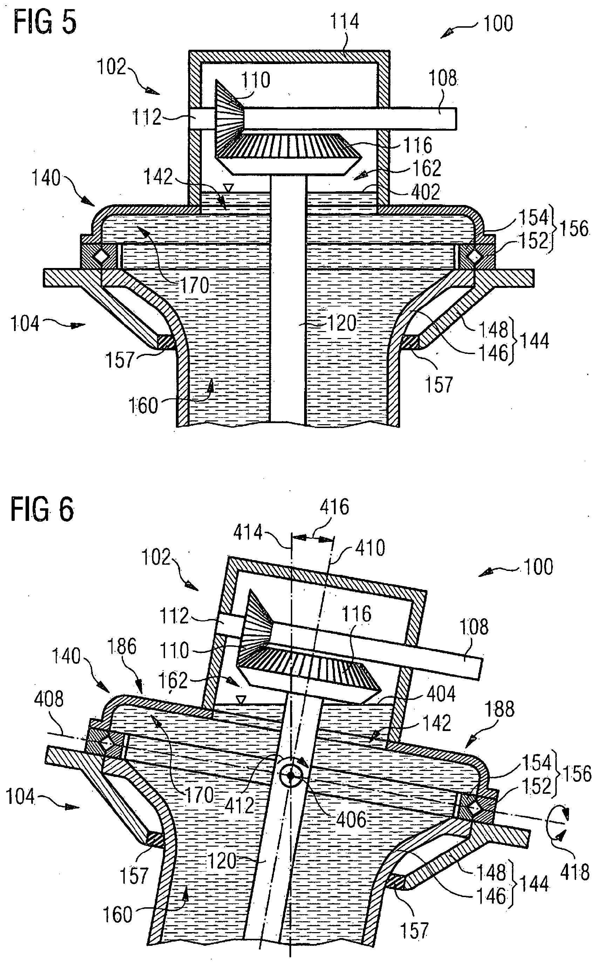

In Fig. 5 an exemplary lubricant level during operation of azimuth thruster 100 is shown. As mentioned, during operation of azimuth thruster 100, lubricant expands due to heat and aeration. This results in hollow space 170 being filled with lubricant. As hollow space 170 is configured to accommodate a volume of lubricant during operation of azimuth thruster 100, the resulting lubricant level in second lubricant compartment 162, indicated by line 402, is below upper gear crown wheel 116. As a consequence, upper gear crown wheel 116 is not immersed in lubricant and, thus, a splash lubrication of upper gear crown wheel 116 and upper gear pinion wheel 110 is maintained. Lubricant level 402 may therefore constitute a maximal lubricant fill level during operation of azimuth thruster 100.

Referring to Fig. 6, azimuth thruster 100 is shown tilted in clockwise direction with respect to the azimuth thruster 100 shown in Fig. 5. To easier explain the tilt of azimuth thruster 100, in Fig. 6 three azimuth thruster axes are introduced. A first azimuth thruster axis 406 extends perpendicular to a plane containing Fig. 6. A second azimuth thruster axis 408 extends in a plane containing slewing bearing 156 and is orthogonal to first azimuth thruster axis 406. A third azimuth thruster axis 410 extends along upper crown wheel shaft. 120 and is orthogonal to second azimuth thruster axis 408 and first azimuth thruster axis 406. First, second and third azimuth thruster axes 406, 408, 410 form an orthogonal coordinate system.

Based on the first, second and third azimuth thruster axes 406, 408, 410 the tilt of azimuth thruster 100 as shown in Fig. 6 is performed by tilting azimuth thruster 100 about first azimuth thruster axis 406. In other words, the tilt of azimuth thruster 100 about first azimuth thruster axis 406 is performed by rotating third azimuth thruster axis 410 around first azimuth thruster axis 406, as indicated by the semi-circular arrow 412.

A tilt of azimuth thruster 100 about first azimuth thruster axis 406 corresponds to a rearward tilt of azimuth thruster 100. Such a rearward tilt of azimuth thruster 100 may be necessary, for example, when azimuth thruster 100 is installed in the marine vessel using an azimuth thruster installation arrangement. As can be seen, even when azimuth thruster 100 is tilted about first azimuth thruster axis 406 by a predetermined maximal tilt angle 416 with respect to a vertical line 414, the resulting lubricant level, indicated by line 404, is below upper gear crown wheel 116. Thus, even during a rearwardly tilted installation of azimuth thruster 100 within the marine vessel, upper gear crown wheel 116 is not immersed in lubricant and splash lubrication of upper gear crown wheel 116 is ensured.

As can be further seen in Fig. 6, separation plate 140 is arranged in azimuth thruster 100 such that first hollow space portion 186 is positioned on the left-hand side of third azimuth thruster axis 410, whereas second hollow space portion 188 is positioned on the right-hand side of third azimuth thruster axis 410. This ensures that the main portion of lubricant is accommodated by first hollow space sportion 186 during a tilt of azimuth thruster 100 as shown in Fig. 6.

Moreover, as indicated in Fig. 6, azimuth thruster 100 is also tiltable about second azimuth thruster axis 408. Such a tilt of azimuth thruster 100 is performed by tilting azimuth thruster 100 about second azimuth thruster axis 408. In other words, the tilt of azimuth thruster 100 about second azimuth thruster axis 408 is performed by rotating third azimuth thruster axis 410 around second azimuth thruster axis 408, as indicated by the semi-circular arrow 418.

A tilt of azimuth thruster 100 about second azimuth thruster axis 408 corresponds to a sideways tilt of azimuth thruster 100. Such a sideways tilt of azimuth thruster 100 may be necessary, for example, when the marine vessel is powered by two azimuth thrusters 100 arranged in parallel in the marine vessel. As indicated by the semi-circular arrow 418, a sideways tilt may be clockwise (when viewed along second azimuth thruster axis 408) or counter-clockwise (when viewed along second azimuth thruster axis 408), depending on which side of the marine vessel azimuth thruster 100 is installed.

As can be seen, hollow space 170 is configured to accommodate enough lubricant such that during a tilt about first azimuth thruster axis 406 and about second azimuth thruster axis 408, the resulting lubricant level, indicated by line 404, is below upper gear crown wheel 116. Hollow space 170 is configured such that lubricant level 404 is below upper gear crown wheel 116 for tilt angles up to predetermined maximal tilt angle 416 around first azimuth thruster axis 406 and second azimuth thruster axis 408. Predetermined maximal tilt angle 416 is in a range between about 5 degrees and about 15 degrees.

Thus, even during a rearwardly and outboardly tilted installation of azimuth thruster 100 within the marine vessel, upper gear crown wheel 116 is not immersed in lubricant and splash lubrication of upper gear crown wheel 116 is ensured.

Lubricant level 400 (shown in Fig. 4) in first lubricant compartment 160 is such that slewing bearing 156 is always immersed in lubricant independent of a tilt of azimuth thruster 100 about first azimuth thruster axis 406 or second azimuth thruster axis 408 up.to predetermined maximal tilt angle 416.

### Industrial Applicability

The separation plate disclosed herein may be applicable to any azimuth thruster including an upper gear unit and an azimuth unit with a bath lubrication of the slewing bearing and a splash lubrication of the upper gear transmission, in particular of the upper gear crown wheel. Such azimuth thrusters are, for example, azimuth thrusters of the series MTA 3 - MTA 8 of Caterpillar Propulsion Production AB, Sweden. A person skilled in the art will, however, appreciate that other azimuth thrusters may be applicable as well.

In the following, operation of azimuth thruster 100 including separation plate 140 is explained with reference to Fig. 1 to Fig. 6. Prior to operation of azimuth thruster 100 lubricant is filled into first lubricant compartment 160 such that slewing bearing 156 is immersed in lubricant. This ensures that a full bath lubrication of slewing bearing 156 is provided. At this stage, hollow space 170 formed in cylindrical body 164 is not filled with lubricant. During operation of azimuth thruster 100 lubricant accommodated in first lubricant compartment 160 expands due to heat and aeration. At this stage, hollow space 170 begins to fill with lubricant. Hollow space 170 includes a defined minimal accommodation volume configured to accommodate enough lubricant such that during operation of azimuth thruster 100 lubricant penetrating hole 142 and entering second lubricant compartment 162 does not reach upper gear crown wheel 116. As a result, splash lubrication of upper gear crown wheel 116 and thus of the upper gear transmission is maintained during operation of azimuth thruster 100.

By using separation plate 140, frictional losses due to upper gear crown wheel 116 churning lubricant may be reduced and an efficiency of azimuth thruster 100 may be increased. Moreover, by providing hollow space 170 within separation plate 140, no separate lubricant expansion tank is required. Thus, piping and hydraulics associated with the separate lubricant expansion tank are no longer needed and costs for maintenance may be reduced. Moreover, as the separate lubricant expansion tank usually is disposed on top of upper gear housing 114, the height of azimuth thruster 100 may be reduced and, thus, azimuth thruster 100 may also be operated in shallow water.

Moreover, hollow space 170 is configured such that a tilt of azimuth thruster 100 about first azimuth thruster axis 406 and/or second azimuth thruster axis 408 is compensated by hollow space 170, in that the resulting lubricant level is below upper gear crown wheel 116 up to a predetermined maximal tilt angle in a range between about 5 degrees and about 15 degrees.

Although the preferred embodiments of this invention have been described herein, improvements and modifications may be incorporated without departing from the scope of the following claims.

## Claims

1. A separation plate (140) configured to be disposed between an azimuth unit (104) and an upper gear unit (102) of an azimuth thruster (100) such that a first lubricant compartment (160) disposed inside the azimuth unit (104) is at least partially separated from a second lubricant compartment (162) disposed inside the upper gear unit (102), the separation plate (140) comprising:
a cylindrical body (164) with a central axis (166);
a hole (142) formed in the cylindrical body (164) and configured to fluidly connect the first lubricant compartment (160) to the second lubricant compartment (162); and
a hollow space (170) formed in the cylindrical body (164) and open to the first lubricant compartment (160), the hollow space (170) including a defined minimal accommodation volume configured to accommodate a volume of lubricant such that a lubricant level (402) in the second lubricant compartment (162) is below an upper gear crown wheel (116) of the upper gear unit (102) during operation of the azimuth thruster (100), wherein
the hollow space (170) includes a first hollow space portion (186) formed in a first cylindrical body portion and extending in circumferential direction about the central axis (166) in a range between about 140 degrees and about 220 degrees, and a second hollow space portion (188) formed in a second cylindrical body portion opposite the first cylindrical body portion and extending in circumferential direction about the central axis (166) in a range between about 20 degrees and about 60 degrees.

2. The separation plate (140) according to claim 1, wherein the hole (142) includes a hole axis (168) extending along the central axis (166), the hollow space (170) extends at least partially circumferentially about the central axis (166) and is disposed radially outward of the hole (142).

3. The separation plate (140) according to claims 1 or 2, wherein the first hollow space portion (186) extends in circumferential direction symmetric about an axis (190) extending in a plane perpendicular to the central axis (166), and the second hollow space portion (188) opposite the first hollow space portion (186) extends in circumferential direction symmetric about the same axis (190).

4. The separation plate (140) according to any one of the preceding claims, wherein the hollow space (170) in a radial plane of the central axis (166) includes an outer side wall (172) provided at a radial outer position with respect to the central axis (166) and an inner side wall (174) provided at a radial inner position with respect to the central axis (166), the inner side wall (174) being at least partially aligned with a circumferential face (176) of the hole (142).

5. The separation plate (140) according to claim 4, wherein the hollow space (170) includes a top wall (178) connecting the outer side wall (172) with the inner side wall (174), the top wall (178) transitioning to the outer side wall (172) via a first rounded edge (180) and to the inner side wall (174) via a second rounded edge.

6. The separation plate (140) according to any one of the preceding claims, wherein the hollow space (170) includes an axial extension (182) with respect to the central axis (166) and a radial extension (184) with respect to the central axis (166), the axial extension (182) having a ratio to the radial extension (184) in a range between about 2% and about 25%.

7. The separation plate (140) according to any one of the preceding claims, wherein the hole (142) is configured to accommodate a vertical input shaft (118) of the azimuth thruster (100).

8. The separation plate (140) according to any one of the preceding claims, wherein the defined minimal accommodation volume is configured to accommodate a volume of lubricant in a range between about 100 liters and about 200 liters.

9. The separation plate (140) according to any one of the preceding claims, wherein the separation plate (140) includes first and second openings (192, 194) to provide access to the first lubricant compartment (160).

10. An azimuth thruster (100) for a marine vessel, comprising:
an upper gear unit (102) including an upper gear crown wheel (116);
an azimuth unit (104) including a slewing bearing (156);
a first lubricant compartment (160) disposed inside the azimuth unit (104) and configured to accommodate lubricant for bath lubricating the slewing bearing (156);
a second lubricant compartment (162) disposed inside the upper gear unit (102) and configured to accommodate lubricant for splash-lubricating the upper gear crown wheel (116); and
a separation plate (140) according to any one of the preceding claims.

11. The azimuth thruster (100) according to claim 10, wherein the defined minimal accommodation volume is configured such that the lubricant level (404) in the second lubricant compartment (162) is below the upper gear crown wheel (116) for a tilt of the azimuth thruster (100) about a first azimuth thruster axis (406) up to a predetermined maximal tilt angle (416) in a range between about 5 degrees and about 15 degrees.

12. The azimuth thruster (100) according to claim 11, wherein the defined minimal accommodation volume is configured such that the lubricant level (404) in the second lubricant compartment (162) is below the upper gear crown wheel (116) for a tilt of the azimuth thruster (100) about a second azimuth thruster axis (408) extending perpendicular to the first azimuth thruster axis (406) up to the predetermined maximal tilt angle (416) in a range between about 5 degrees and about 15 degrees.

13. The azimuth thruster (100) according to claims 11 or 12 wherein the lubricant level (400) in the first lubricant compartment (160) is always above the slewing bearing (156) even if the azimuth thruster (100) is tilted about the first azimuth thruster axis (406) and the second azimuth thruster axis (408) by the predetermined maximal tilt angle (416), the predetermined maximal tilt angle (416) being in a range between about 5 degrees and about 15 degrees.

## Patentansprüche

1. Trennplatte (140), die dazu ausgebildet ist, zwischen einer Azimuteinheit (104) und einer oberen Getriebeeinheit (102) eines Azimutstrahlruders (100) angeordnet zu werden, derart, dass eine erste Schmiermittelkammer (160), die innerhalb der Azimuteinheit (104) angeordnet ist, von einer zweiten Schmiermittelkammer (162), die innerhalb der oberen Getriebeeinheit (102) angeordnet ist, mindestens teilweise getrennt ist, wobei die Trennplatte (140) umfasst:
einen zylindrischen Körper (164) mit einer Mittelachse (166);
ein Loch (142), das in dem zylindrischen Körper (164) ausgebildet ist und dazu ausgebildet ist, die erste Schmiermittelkammer (160) mit der zweiten Schmiermittelkammer (162) in Fluidverbindung zu bringen; und
einen Hohlraum (170), der in dem zylindrischen Körper (164) ausgebildet ist und zu der ersten Schmiermittelkammer (160) hin offen ist, wobei der Hohlraum (170) ein definiertes minimales Aufnahmevolumen umfasst, das dazu ausgebildet ist, eine Schmiermittelmenge aufzunehmen, derart, dass ein Schmiermittelpegel (402) in der zweiten Schmiermittelkammer (162) während des Betriebs des Azimutstrahlruders (100) unter einem oberen Getriebekronrad (116) der oberen Getriebeeinheit (102) ist, wobei
der Hohlraum (170) einen ersten Hohlraumabschnitt (186), der in einem ersten zylindrischen Körperabschnitt ausgebildet ist und sich in Umfangsrichtung in einem Bereich zwischen etwa 140 Grad und etwa 220 Grad um die Mittelachse (166) erstreckt, und einen zweiten Hohlraumabschnitt (188), der in einem zweiten zylindrischen Körperabschnitt ausgebildet ist, der dem ersten zylindrischen Körperabschnitt entgegengesetzt ist, und sich in Umfangsrichtung in einem Bereich zwischen etwa 20 Grad und etwa 60 Grad um die Mittelachse (166) erstreckt, umfasst.

2. Trennplatte (140) nach Anspruch 1, wobei das Loch (142) eine Lochachse (168) umfasst, die sich entlang der Mittelachse (166) erstreckt, wobei sich der Hohlraum (170) mindestens teilweise am Umfang um die Mittelachse (166) erstreckt und von dem Loch (142) radial nach außen angeordnet ist.

3. Trennplatte (140) nach Anspruch 1 oder 2, wobei sich der erste Hohlraumabschnitt (186) in Umfangsrichtung symmetrisch um eine Achse (190) erstreckt, die sich in einer Ebene im rechten Winkel zu der Mittelachse (166) erstreckt, und wobei sich der zweite Hohlraumabschnitt (188), der dem ersten Hohlraumabschnitt (186) entgegengesetzt ist, in Umfangsrichtung symmetrisch um dieselbe Achse (190) erstreckt.

4. Trennplatte (140) nach einem der vorstehenden Ansprüche, wobei der Hohlraum (170) in einer radialen Ebene der Mittelachse (166) eine äußere Seitenwand (172), die an einer radialen äußeren Position in Bezug auf die Mittelachse (166) vorgesehen ist, und eine innere Seitenwand (174), die an einer radialen inneren Position in Bezug auf die Mittelachse (166) vorgesehen ist, umfasst, wobei die innere Seitenwand (174) mindestens teilweise mit einer Umfangsfläche (176) des Lochs (142) ausgerichtet ist.

5. Trennplatte (140) nach Anspruch 4, wobei der Hohlraum (170) eine obere Wand (178) umfasst, welche die äußere Seitenwand (172) mit der inneren Seitenwand (174) verbindet, wobei die obere Wand (178) über eine erste gerundete Kante (180) in die äußere Seitenwand (172) übergeht und über eine zweite gerundete Kante in die innere Seitenwand (174) übergeht.

6. Trennplatte (140) nach einem der vorstehenden Ansprüche, wobei der Hohlraum (170) eine axiale Erstreckung (182) in Bezug auf die Mittelachse (166) und eine radiale Erstreckung (184) in Bezug auf die Mittelachse (166) umfasst, wobei die axiale Erstreckung (182) ein Verhältnis zu der radialen Erstreckung (184) in einem Bereich zwischen etwa 2% und etwa 25% aufweist.

7. Trennplatte (140) nach einem der vorstehenden Ansprüche, wobei das Loch (142) dazu ausgebildet ist, eine senkrechte Eingangswelle (118) des Azimutstrahlruders (100) aufzunehmen.

8. Trennplatte (140) nach einem der vorstehenden Ansprüche, wobei das definierte minimale Aufnahmevolumen dazu ausgebildet ist, eine Schmiermittelmenge in einem Bereich zwischen etwa 100 Liter und etwa 200 Liter aufzunehmen.

9. Trennplatte (140) nach einem der vorstehenden Ansprüche, wobei die Trennplatte (140) eine erste und eine zweite Öffnung (192, 194) umfasst, um Zugang zu der ersten Schmiermittelkammer (160) vorzusehen.

10. Azimutstrahlruder (100) für ein Wasserfahrzeug, umfassend:
eine obere Getriebeeinheit (102), die ein oberes Getriebekronrad (116) umfasst;
eine Azimuteinheit (104), die ein Schwenklager (156) umfasst;
eine erste Schmiermittelkammer (160), die innerhalb der Azimuteinheit (104) angeordnet ist und dazu ausgebildet ist, Schmiermittel für die Badschmierung des Schwenklagers (156) aufzunehmen;
eine zweite Schmiermittelkammer (162), die innerhalb der oberen Getriebeeinheit (102) angeordnet ist und dazu ausgebildet ist, Schmiermittel für die Spritzschmierung des oberen Getriebekronrads (116) aufzunehmen; und
eine Trennplatte (140) nach einem der vorstehenden Ansprüche.

11. Azimutstrahlruder (100) nach Anspruch 10, wobei das definierte minimale Aufnahmevolumen derart ausgebildet ist, dass für ein Kippen des Azimutstrahlruders (100) um eine erste Azimutstrahlruderachse (406) bis zu einem vorgegebenen maximalen Kippwinkel (416) in einem Bereich zwischen etwa 5 Grad und etwa 15 Grad der Schmiermittelpegel (404) in der zweiten Schmiermittelkammer (162) unter dem oberen Getriebekronrad (116) ist.

12. Azimutstrahlruder (100) nach Anspruch 11, wobei das definierte minimale Aufnahmevolumen derart ausgebildet ist, dass für ein Kippen des Azimutstrahlruders (100) um eine zweite Azimutstrahlruderachse (408), die sich im rechten Winkel zu der ersten Azimutstrahlruderachse (406) erstreckt, bis zu einem vorgegebenen maximalen Kippwinkel (416) in einem Bereich zwischen etwa 5 Grad und etwa 15 Grad der Schmiermittelpegel (404) in der zweiten Schmiermittelkammer (162) unter dem oberen Getriebekronrad (116) ist.

13. Azimutstrahlruder (100) nach Anspruch 11 oder 12, wobei der Schmiermittelpegel (400) in der ersten Schmiermittelkammer (160) stets über dem Schwenklager (156) ist, selbst wenn das Azimutstrahlruder (100) um die erste Azimutstrahlruderachse (406) und die zweite Azimutstrahlruderachse (408) um den vorgegebenen maximalen Kippwinkel (416) gekippt wird, wobei der vorgegebene maximale Kippwinkel (416) in einem Bereich zwischen etwa 5 Grad und etwa 15 Grad liegt.

## Revendications

1. Plaque de séparation configurée (140) pour être disposée entre une unité azimutale (104) et une unité d'engrenage supérieure (102) d'un propulseur azimutal (100) de sorte qu'un premier compartiment de lubrifiant (160) disposé à l'intérieur de l'unité azimutale (104) est au moins partiellement séparé d'un second compartiment de lubrifiant (162) disposé à l'intérieur de l'unité d'engrenage supérieure (102), la plaque de séparation (140) comprenant :
un corps cylindrique (164) avec un axe central (166);
un trou (142) formé dans le corps cylindrique (164) et configuré pour relier à fluide le premier compartiment de lubrifiant (160) au second compartiment de lubrifiant (162) ; et
un espace creux (170) formé dans le corps cylindrique (164) et ouvert sur le premier compartiment de lubrifiant (160), l'espace creux (170) incluant un volume de logement minimal défini configuré pour loger un volume de lubrifiant de sorte qu'un niveau de lubrifiant (402) dans le second compartiment de lubrifiant (162) est au-dessous d'une grande couronne d'engrenage supérieure (116) de l'unité d'engrenage supérieure (102) pendant le fonctionnement du propulseur azimutal (100), dans lequel
l'espace creux (170) inclut une première portion d'espace creux (186) formée dans une première portion de corps cylindrique et s'étendant dans la direction circonférentielle autour de l'axe central (166) dans une plage entre environ 140 degrés et environ 220 degrés, et une seconde portion d'espace creux (188) formée dans une seconde portion de corps cylindrique en face de la première portion de corps cylindrique et s'étendant dans une direction circonférentielle autour de l'axe central (166) dans une plage entre environ 20 degrés et environ 60 degrés.

2. Plaque de séparation (140) selon la revendication 1, dans laquelle le trou (142) inclut un axe de trou (168) s'étendant le long de l'axe central (166), l'espace creux (170) s'étend au moins partiellement de façon circonférentielle autour de l'axe central (166) et est disposé de façon radiale à l'extérieur du trou (142).

3. Plaque de séparation (140) selon les revendications 1 ou 2, dans laquelle la première portion d'espace creux (186) s'étend dans une direction circonférentielle symétrique autour d'un axe (190) s'étendant dans un plan perpendiculaire à l'axe central (166) et la seconde portion d'espace creux (188) opposée à la première portion d'espace creux (186) s'étend dans une direction circonférentielle symétrique autour du même axe (190).

4. Plaque de séparation (140) selon l'une quelconque des revendications précédentes, dans lequel l'espace creux (170) dans un plan radial de l'axe central (166) inclut une paroi latérale extérieure (172) disposée au niveau d'une position extérieure radiale par rapport à l'axe central (166) et une paroi latérale intérieure (174) disposée à une position intérieure radiale par rapport à l'axe central (166), la paroi latérale intérieure (174) étant au moins partiellement alignée sur une face circonférentielle (176) du trou (142).

5. Plaque de séparation (140) selon la revendication 4, dans laquelle l'espace creux (170) inclut une paroi supérieure (178) reliant la paroi latérale extérieure (172) à la paroi latérale intérieure (174), la paroi supérieure (178) effectuant une transition jusqu'à la paroi latérale extérieure (172) par l'intermédiaire d'un premier bord arrondi (180) et jusqu'à la paroi latérale intérieure (174) par l'intermédiaire d'un second bord arrondi.

6. Plaque de séparation (140) selon l'une quelconque des revendications précédentes, dans lequel l'espace creux (170) inclut une extension axiale (182) par rapport à l'axe central (166) et une extension radiale (184) par rapport à l'axe central (166), l'extension axiale (182) ayant un ratio par rapport à l'extension radiale (184) dans une plage entre environ 2 % et environ 25 %.

7. Plaque de séparation (140) selon l'une quelconque des revendications précédentes, dans lequel le trou (142) est configuré pour loger un arbre d'entrée vertical (118) du propulseur azimutal (100).

8. Plaque de séparation (140) selon l'une quelconque des revendications précédentes, dans laquelle le volume de logement minimal défini est configuré pour loger un volume de lubrifiant dans une plage entre environ 100 litres et environ 200 litres.

9. Plaque de séparation (140) selon l'une quelconque des revendications précédentes, dans lequel la plaque de séparation (140) inclut des première et seconde ouvertures (192, 194) pour donner accès au premier compartiment de lubrifiant (160).

10. Propulseur azimutal (100) pour un navire maritime, comprenant :
une unité d'engrenage supérieure (102) incluant une grande couronne d'engrenage supérieure (116) ;
une unité azimutale (104) incluant une structure portante pivotante (156) ;
un premier compartiment de lubrifiant (160) disposé à l'intérieur de l'unité azimutale (104) et configuré pour loger du lubrifiant pour la lubrification par bain de la structure portante pivotante (156) ;
un second compartiment de lubrifiant (162) disposé à l'intérieur de l'unité d'engrenage supérieure (102) et configuré pour loger du lubrifiant pour la lubrification par projection de la grande couronne d'engrenage supérieure (116) ; et
une plaque de séparation (140) selon l'une quelconque des revendications précédentes.

11. Propulseur azimutal (100) selon la revendication 10, dans lequel le volume de logement minimal défini est configuré de sorte que le niveau de lubrifiant (404) dans le second compartiment de lubrifiant (162) est au-dessous de la grande couronne d'engrenage supérieure (116) pour une inclinaison du propulseur azimutal (100) autour d'un premier axe de propulseur azimutal (406) jusqu'à un angle d'inclinaison maximal prédéterminé (416) dans une plage entre environ 5 degrés et environ 15 degrés.

12. Propulseur azimutal (100) selon la revendication 11, dans lequel le volume de logement minimal défini est configuré de sorte que le niveau de lubrifiant (404) dans le second compartiment de lubrifiant (162) est au-dessous de la grande couronne d'engrenage supérieure (116) pour une inclinaison du propulseur azimutal (100) autour d'un second axe de propulseur azimutal (408) s'étendant perpendiculairement au premier axe de propulseur azimutal (406) jusqu'à l'angle d'inclinaison maximal prédéterminé (416) dans une plage entre environ 5 degrés et environ 15 degrés.

13. Propulseur azimutal (100) selon les revendications 11 ou 12, dans lequel le niveau de lubrifiant (400) dans le premier compartiment de lubrifiant (160) est toujours au-dessus de la structure portante pivotante (156) même si le propulseur azimutal (100) est incliné autour du premier axe de propulseur azimutal (406) et du second axe de propulseur azimutal (408) de l'angle d'inclinaison maximal prédéterminé (416), l'angle d'inclinaison maximal prédéterminé (416) étant dans une plage entre environ 5 degrés et environ 15 degrés.
